# EUROPÄISCHE PATENTANMELDUNG

(11) **EP 1 378 326 A1**
(43) Veröffentlichungstag der Anmeldung: **07.01.2004**
(21) Anmeldenummer: 03003749.3
(22) Anmeldetag: 19.02.2003
(51) Int. Cl.: B25J 21/00, B24C 9/00

(54) **Arbeitskammer mit einer Dichteinrichtung zum Einführen eines äusserlichen Roboterarms**

(30) Priorität: 05.07.2002 DE 10230396
(71) Anmelder: Rösler Oberflächentechnik GmbH, 96231 Bad Staffelstein (DE)
(72) Erfinder: Dangel, Matthias, 96052 Bamberg (DE)
(74) Vertreter: Manitz, Finsterwald & Partner GbR

(57) **Zusammenfassung**

Eine Strahlanlage besteht aus einer Arbeitskammer (12) und einem Roboter (10), der sich ausserhalb der Kammer befindet. Die Arbeitskammer weist einen Zugang (24,44,72,100) zum Einführen des Roboterarmes (10) auf. Im Bereich des Zugangs ist eine Dichteinrichtung (26,50,70,80) vorgesehen, die an dem Roboterarm (10) oder an der Kammerwand (14) befestigt ist. Die Arbeitskammer (12) dient zum Strahlen von Werkstücken mittels Strahlmittel.

## Beschreibung

Die vorliegende Erfindung betrifft eine Arbeitskammer für eine Strahlanlage, die mit einem Roboterarm zur Manipulation eines zu strahlenden Werkstücks versehen ist, wobei die Arbeitskammer eine Kammerwand mit einem Zugang zum Einführen des Roboterarmes aufweist, und wobei im Bereich des Zugangs eine Dichteinrichtung vorgesehen ist, die zwischen Roboterarm und Kammerwand abdichtet.

In einer derartigen Arbeitskammer können insbesondere kompliziert geformte Werkstücke gestrahlt werden, wobei die Werkstücke mit Hilfe des Roboterarmes in die und aus der Arbeitskammer gebracht werden. Hierbei muss die Dichteinrichtung dafür sorgen, dass während des Strahlens im Bereich des Zugangs kein Strahlmittel aus der Arbeitskammer austreten kann. Bei bestimmten Anwendungen kann es dabei wünschenswert sein, den Roboterarm und damit das Werkstück während des Strahlvorganges zu bewegen. In diesem Fall muss die Dichteinrichtung eine Bewegbarkeit des Roboterarmes um eine oder mehrere Achsen ermöglichen.

Es ist die Aufgabe der vorliegenden Erfindung, eine Arbeitskammer der eingangs genannten Art dahingehend weiterzubilden, dass eine kostengünstige, d.h. konstruktiv und apparativ wenig aufwendige Abdichtung zwischen Roboterarm und Arbeitskammer möglich ist.

Die Lösung dieser Aufgabe erfolgt durch die Merkmale der unabhängigen Ansprüche und insbesondere dadurch, dass die Dichteinrichtung ein zumindest einflügeliges Schleusentor aufweist, das mit einer Öffnung für den Roboterarm versehen ist, wobei im Bereich der Öffnung ein Dichtelement vorgesehen ist, das zwischen Roboterarm und Kammerwand abdichtet.

Erfindungsgemäß wird ein mit der Kammerwand verbundenes Schleusentor vorgesehen, das kostengünstig herstellbar ist und das lediglich im Bereich seiner Öffnung an die Roboterarme verschiedener Hersteller angepasst werden muss. Die Dichteinrichtung gemäß der Erfindung ist universell einsetzbar und besitzt keine störungsanfälligen Teile, die zusammen mit dem Roboterarm bewegt werden müssten. Insbesondere muss die Kammerwand nicht mit einer speziellen Durchführung für den Roboterarm versehen werden. Die Abdichtung erfolgt instantan beim Schließen des Schleusentores.

Vorteilhafte Ausführungsformen der Erfindung sind in der Beschreibung, den Zeichnungen sowie den Unteransprüchen beschrieben.

Nach einer ersten vorteilhaften Ausführungsform weist das Schleusentor zumindest einen Schiebe- oder Schwenkflügel auf. Auf diese Weise ist ein schnelles Öffnen des Schleusentores gewährleistet, um einen raschen Werkstückwechsel zu ermöglichen.

Nach einer weiteren vorteilhaften Ausführungsform kann das Schleusentor mehrere Flügel aufweisen, die jeweils Aussparungen besitzen, welche gemeinsam die Öffnung bilden. Bei dieser Ausführungsform ist es beispielsweise möglich, die Öffnung zentral in dem Schleusentor vorzusehen, wodurch die Manipulation des Roboterarmes bzw. dessen Ansteuerung vereinfacht ist.

Eine konstruktiv besonders einfache Lösung ist bei einer Ausführungsform gegeben, bei der der Rand der Öffnung des Schleusentores mit dem Dichtelement versehen ist. Bei dieser Ausführungsform kann der Roboterarm eingesetzt werden, ohne dass an diesem weitere Bauteile, Dichtelemente oder Steuerelemente befestigt werden müssen.

Nach einer weiteren vorteilhaften Ausführungsform ist das Dichtelement im Wesentlichen sphärisch ausgebildet und besitzt eine Durchlassöffnung für den Roboterarm. Bei dieser Ausführungsform kann das Dichtelement auf den Roboterarm aufgezogen werden, wodurch ein dichtender Eingriff zwischen Roboterarm und Kammerwand nach Art eines abgedichteten Kugellagers geschaffen ist. Hierbei kann das Dichtelement aus elastischem Material bestehen oder aus verschleißfestem, steifem Material, wobei in diesem Fall im Bereich des Schleusentores eine Dichtlippe oder dergleichen vorgesehen werden kann.

Nach einem weiteren Aspekt der Erfindung betrifft diese eine Arbeitskammer für eine Strahlanlage, die mit einem Roboterarm zur Manipulation eines zu strahlenden Werkstückes versehen ist, wobei die Arbeitskammer eine Kammerwand mit einem Zugang zum Einführen des Roboterarmes aufweist, wobei im Bereich des Zugangs eine elastische Dichteinrichtung vorgesehen ist, die zwischen Roboterarm und Kammerwand abdichtet und die an dem Roboterarm befestigbar ist.

Zur Lösung der eingangs genannten Aufgabe ist hierbei an der Kammerwand ein Verriegelungsmittel vorgesehen, das eine Verriegelung zwischen Dichteinrichtung und Arbeitskammer bewirkt.

Bei dieser Ausführungsform der Erfindung ist ein Verriegelungsmittel, das zwischen der am Roboterarm befestigten Dichteinrichtung und der Kammerwand verriegelt, nicht am Roboterarm sondern an der Kammerwand vorgesehen, so dass die zur Betätigung des Verriegelungsmittels erforderlichen Steuerorgane oder Steuerleitungen nicht über den Roboterarm geführt und mit diesem bewegt werden müssen. Da die Verriegelungsmittel stationär im Bereich der Arbeitskammer vorgesehen sind, ergibt sich eine sehr einfache Konstruktion, da die Ansteuerung der Verriegelungsmittel ebenfalls stationär geführt werden kann.

Nach einer vorteilhaften Ausführungsform kann das Verriegelungsmittel durch eine Bewegung des Roboterarms, insbesondere ausschließlich durch eine Bewegung des Roboterarms betätigbar sein. Hierdurch können separate Steuer- und Kontrollmittel entfallen, was den Herstellungs- und Montageaufwand weiter reduziert.

Nach einer weiteren Ausführungsform der Erfindung ist das Verriegelungsmittel nach Art eines Bajonettverschlusses gestaltet. Ein solcher Bajonettverschluss ist kostengünstig herstellbar und lässt sich durch einfache Drehbewegung des Roboterarmes öffnen bzw. schließen.

Nach einer weiteren vorteilhaften Ausbildung der Erfindung weist die Dichteinrichtung eine selbsttragende Scheibe aus flexiblem Material auf.

Eine solche Ausführungsform besitzt den Vorteil, dass für die Dichteinrichtung keine Stütz- oder Haltemittel vorgesehen werden müssen.

Für den Fall, dass die Dichteinrichtung zur Erhöhung der Bewegbarkeit des Roboterarms nicht aus selbsttragendem Material besteht, kann nach einer weiteren Ausführungsform der Erfindung zwischen einem inneren und einem äußeren Rand der Dichteinrichtung ein insbesondere lösbares Stützmittel vorgesehen werden, das zusammen mit dem Roboterarm bewegbar ist. Ein solches Stützmittel kann die Dichteinrichtung so lange abstützen, bis diese an der Kammerwand verriegelt ist. Anschließend kann das Stützmittel von der Dichteinrichtung gelöst werden, wodurch sich eine freie Bewegbarkeit des Roboterarms ergibt. Zum Entfernen des Roboterarmes aus der Arbeitskammer können die Stützmittel dann wieder an der Dichteinrichtung befestigt werden.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1 und Fig. 2: eine erste Ausführungsform einer Arbeitskammer;
- Fig. 3 und Fig. 4: eine zweite Ausführungsform einer Arbeitskammer;
- Fig. 5 und Fig. 6: eine dritte Ausführungsform einer Arbeitskammer;
- Fig. 7 und Fig. 8: vergrößerte Darstellungen des Bereiches VII aus Fig. 5;
- Fig. 9 und Fig. 10: eine vierte Ausführungsform einer Arbeitskammer; und
- Fig. 11: eine vergrößerte Darstellung eines Details aus Fig. 10.

Nachfolgend werden verschiedene Ausführungsformen der Erfindung anhand der beigefügten Figuren beschrieben, wobei für gleiche Bauteile zur vereinfachten Darstellung gleiche Bezugszeichen verwendet werden.

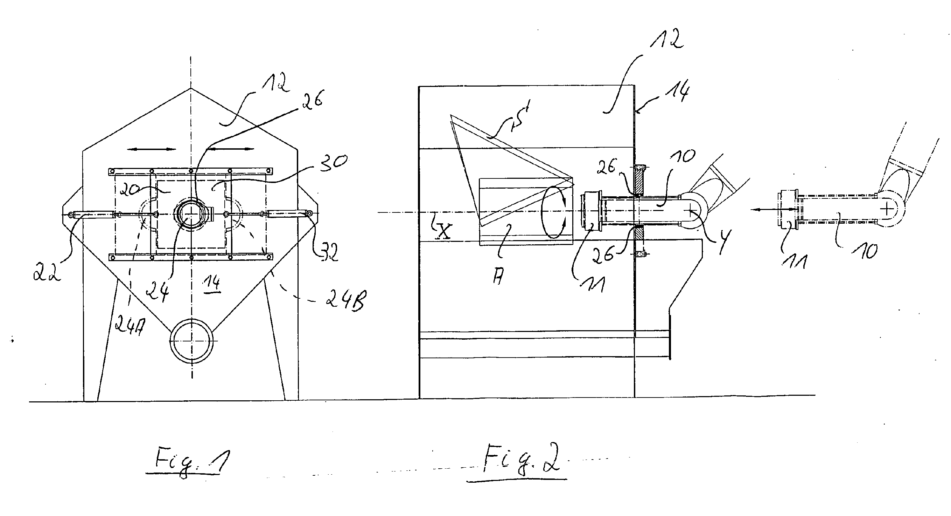

Die Fig. 1 und 2 zeigen eine erste Ausführungsform einer Arbeitskammer 12 für eine Strahlanlage, die mit einem Roboterarm 10 zur Manipulation eines zu strahlenden Werkstückes (nicht dargestellt) versehen ist. Die außer an ihrer Vorderseite allseitig geschlossene Arbeitskammer 12 weist an ihrer Vorderseite eine Kammerwand 14 auf, die einen Zugang zum Einführen des Roboterarmes 10 besitzt. Im Inneren der Arbeitskammer 12 ist eine (nicht dargestellte) Strahleinrichtung vorgesehen, die Strahlmittel in einem Strahlkegel S auf einen Arbeitsbereich A innerhalb der Arbeitskammer schleudert.

Um den Roboterarm 10 mit dem daran befindlichen Werkstück in die Arbeitskammer hinein- und aus der Arbeitskammer herausbewegen zu können und gleichzeitig eine abgedichtete Bewegung des Roboterarmes 10 innerhalb der Arbeitskammer 12 zu ermöglichen, ist bei dieser Ausführungsform ein Schleusentor vorgesehen, das zwei Schiebeflügel 20, 30 aufweist, die jeweils von einem Stellzylinder 22, 32 entlang der Richtung der Doppelpfeile bewegt werden können (Fig. 1). Die beiden Flügel 20, 30 des Schleusentores bilden im geschlossenen Zustand in Draufsicht etwa ein Quadrat und besitzen in der Mitte ihres nach innen gerichteten Randes jeweils eine halbkreisförmige Aussparung 24A, 24B, die im geschlossenen Zustand der Flügel 20, 30 eine kreisförmige Öffnung 24 für den Durchtritt des Roboterarmes 10 ergibt. Hierbei ist der Randbereich der Öffnung des Schleusentores mit einem elastischen Dichtelement 26 versehen, das zwischen Roboterarm und Schleusentor abdichtet.

Bei der in den Fig. 1 und 2 dargestellten Ausführungsform einer Arbeitskammer werden vor Beginn des Strahlvorganges die beiden Flügel 20 und 30 des Schleusentores mit Hilfe der Stellzylinder 22, 32 geöffnet, was der in Fig. 1 strichpunktiert dargestellten Stellung entspricht. Anschließend wird der Roboterarm 10 mit seinem vorderen Ende und dem daran befindlichen Werkstück in das Innere der Arbeitskammer 12 eingefahren und in eine mittige Position gebracht, wie sie in Fig. 2 dargestellt ist. Anschließend werden die beiden Flügel 20, 30 geschlossen, so dass das Dichtelement 26 am Außenumfang des Roboterarmes 10 dichtend anliegt.

Während des sich anschließenden Strahlvorganges kann der Roboterarm 10 in Richtung des Doppelpfeiles in Fig. 2, d.h. entlang seiner Längsachse X hin- und herbewegt werden, um das Werkstück innerhalb des Strahlkegels S zu verschieben. Gleichzeitig kann das Werkstück um die Mittelachse X des Roboterarmes entlang des dargestellten Doppelpfeiles gedreht werden, um ein gleichmäßiges Strahlen zu bewirken. Das Drehen des Werkstückes erfolgt hierbei mit Hilfe einer Drehvorrichtung 11, die am vorderen Ende des Roboterarmes 10 angeordnet ist.

Bei der in den Fig. 3 und 4 dargestellten Ausführungsform einer Arbeitskammer ist das Schleusentor durch zwei Schwenkflügel 40, 60 gebildet, die im geschlossenen Zustand einen Ring mit einem Innenumfang und einem Außenumfang bilden, wobei der kreisförmige Innenumfang eine Öffnung 44 definiert, durch die der Roboterarm 10 in die Arbeitskammer gelangen kann. Die beiden Schwenkflügel 40 und 60 sind jeweils an ihrem oberen Ende um eine horizontale Schwenkachse 41, 61 schwenkbar und werden von jeweils einem Stellzylinder 42, 62 verschwenkt. Im geöffneten Zustand befinden sich die beiden Flügel 40, 60 in der in Fig. 3 strichpunktiert dargestellten Stellung, in der der Roboterarm 10 zusammen mit dem daran befindlichen Werkstück entlang der Mittelachse X durch den geöffneten Zugang in die Arbeitskammer 12 eingefahren werden kann.

Bei dieser Ausführungsform ist als Dichtelement zwischen Roboterarm und Schleusentor bzw. Kammerwand 14 ein sphärisches Dichtelement 50 vorgesehen, das eine mittige Durchlassöffnung für den Roboterarm 10 aufweist, d.h. das Dichtelement 50 ist auf den Roboterarm 10 aufgezogen. Das Dichtelement 50 kann aus Gummi oder Kunststoff bestehen und ermöglicht eine Verschwenkung des Roboterarms 10 innerhalb der Arbeitskammer 12 nach Art eine Kugelgelenkes, wobei stets eine vollständige Abdichtung der Arbeitskammer gewährleistet ist. Hierdurch kann das am vorderen Ende des Roboterarms 10 befindliche Werkstück nicht nur mit Hilfe des Drehantriebs 11 um die Achse X rotiert werden sondern es ist auch eine Bewegung um den Mittelpunkt des Dichtelementes 50 entlang des dargestellten Doppelpfeiles möglich, um das Werkstück innerhalb des Strahlkegels S zu bewegen.

Die Fig. 5 bis 8 zeigen eine dritte Ausführungsform der Erfindung, bei der im Bereich des Zugangs in der Kammerwand 14 eine elastische Dichteinrichtung zwischen Roboterarm und Kammerwand vorgesehen ist, die an dem Roboterarm befestigbar ist.

Bei dieser dritten Ausführungsform ist an dem Roboterarm 10 eine elastische Gummischeibe 70 angeordnet, die selbsttragend ist. Die Gummischeibe 70 hat einen kreisrunden Umfang und ist dichtend auf den Roboterarm 10 aufgezogen, der sich zusammen mit der Gummischeibe 70 bewegt.

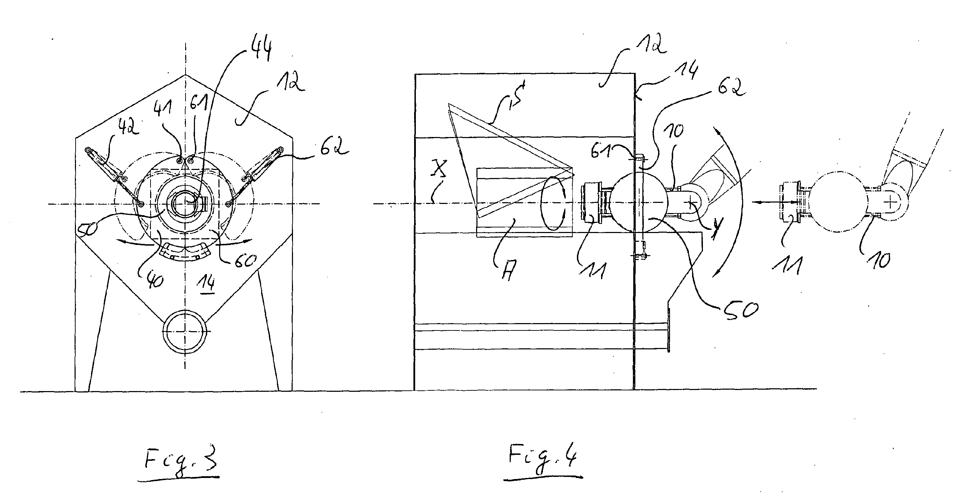

In der Kammerwand 14 ist eine dem Außenumfang der Gummischeibe 70 entsprechende Ringaufnahme 72 vorgesehen, in welche die Gummischeibe 70 passend eingesetzt werden kann. Verteilt über den Außenumfang der Ringaufnahme 72 sind mehrere, beim dargestellten Ausführungsbeispiel vier Verriegelungsmittel vorgesehen, um die Gummischeibe 70 in der Ringaufnahme 72 an der Kammerwand 14 zu verriegeln. Zu diesem Zweck sind an der Gummischeibe 70 radial über den Außenumfang der Gummischeibe 70 vorstehende Bolzen 74 vorgesehen, die mit Aufnahmeschlitzen 76 (Fig. 8) zusammenwirken, die an Ringaufnahme 72 vorgesehen sind. Wie Fig. 8 zeigt, sind die Aufnahmeschlitze 76 nach Art eines Bajonettverschlusses gestaltet, so dass die Gummischeibe 70 durch Einführen der Bolzen 74 in die Aufnahmeschlitze 76 und durch Verdrehen der Gummischeibe 70 entgegen dem Uhrzeigersinn (Fig. 1) an der Ringaufnahme 72 verriegelt werden können. Die Verriegelungsbewegung kann hierbei alleine durch entsprechendes Bewegen des Roboterarmes 10 durchgeführt werden, d.h. die Gummischeibe 70 wird mit ihrem Bolzen 74 so an die Kammerwand 14 angestellt, dass die Bolzen 74 in die Aufnahmeschlitze 76 eingreifen und in diesen verriegeln. Zusätzlich kann ein federbelasteter Sperrriegel oder dergleichen vorgesehen sein, um ein versehentliches Lösen der Bolzen 74 aus den Aufnahmeschlitzen 76 zu verhindern.

Da die Gummischeibe 70 insgesamt flexibel ausgebildet ist, kann der in die Kammer eingefahrene Roboterarm 10 auch verkippt werden, wenn die Gummischeibe 70 an der Kammerwand 14 verriegelt ist.

Zum Entfernen des Werkstückes aus der Arbeitskammer 12 wird der Roboterarm 10 um die Achse X (in Fig. 6) etwas im Uhrzeigersinn verschwenkt, bis der (nicht dargestellte) federbelastete Sperrriegel überwunden ist und die Bolzen 74 aus den Aufnahmeschlitzen 76 freikommen. Anschließend kann der Roboterarm 10 zurückgezogen werden, wodurch sich die Gummischeibe 70 von der Kammerwand 14 löst (vgl. gestrichelte Darstellung in Fig. 6).

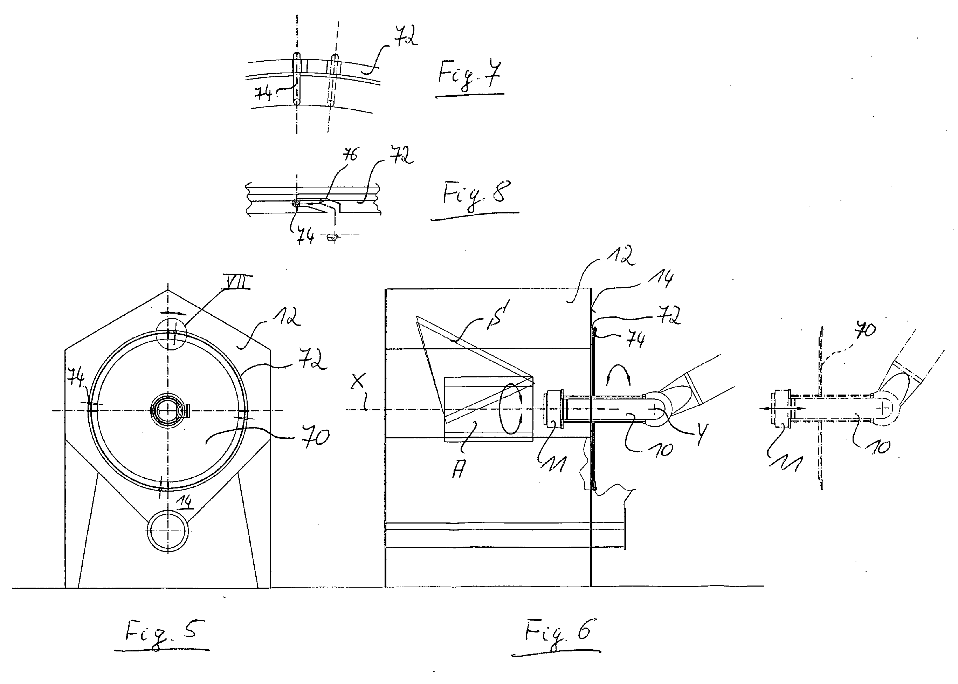

Die Fig. 9 bis 11 zeigen eine vierte Ausführungsform einer Arbeitskammer, bei der die Dichteinrichtung zwischen Roboterarm 10 und Arbeitskammer 12 an dem Roboterarm 10 befestigt ist.

Bei dieser Ausführungsform ist als Dichteinrichtung ein kreisförmiger Faltenbalg 80 vorgesehen, der am Außenumfang des Roboterarmes 10 befestigt ist. Der Faltenbalg 80 ist hochflexibel und daher nicht selbsttragend. Um vor dem Verriegeln des Faltenbalges 80 an der Kammerwand 14 eine ausreichende Abstützung vorzusehen, sind zwischen dem Innenumfang und dem Außenumfang des Faltenbalges lösbare Stützmittel in Form von drei gleichmäßig über den Umfang verteilten Stützhebeln 82 vorgesehen, die mittels Stellzylindern 84 um Schwenkachsen 86 verschwenkt werden können, die tangential zum Außenumfang des Roboterarmes 10 verlaufen.

Wie Fig. 11 zeigt, können die Stützhebel 82 von der gestrichelt dargestellten, zurückgezogenen Position in eine vorgeschwenkte Position verschwenkt werden, in der der Außenumfang des Faltenbalges 80 zwischen den Enden der Stützhebel 82 aufgespannt ist. An den Enden jedes Stützelementes 82 befindet sich eine federbelastete, selbsttätige Klemme 88, die mit einem am Außenumfang des Faltenbalges 80 vorgesehenen Kugelzapfen 89 zusammenwirkt.

Die in der Kammerwand 14 als Zugang für den Roboterarm 10 vorgesehene Kreisöffnung ist von einer ringförmigen Aufnahme 100 begrenzt, in die der Faltenbalg mit seinem Außenumfang passend eingesetzt werden kann. Über den Außenumfang der Ringaufnahme 100 verteilt sind mehrere, beim dargestellten Ausführungsbeispiel vier pneumatisch betätigbare Verriegelungselemente 102 (vgl. Fig. 9) in Form von pneumatisch betätigbaren Sperrbolzen vorgesehen, mit denen der Faltenbalg 80 an der Kammerwand 14 verriegelt werden kann.

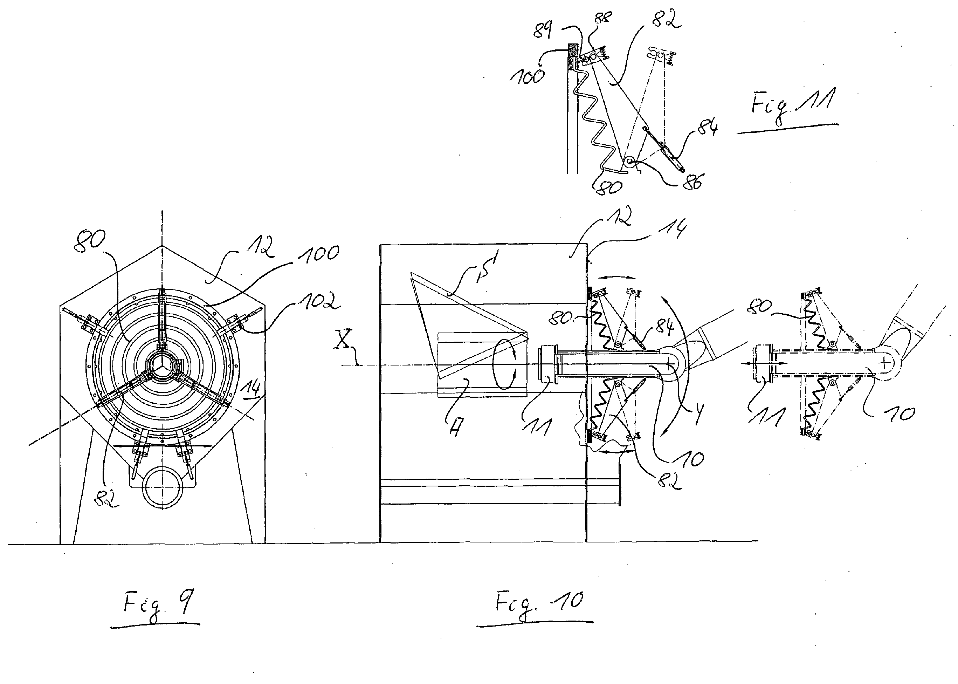

Bei der oben beschriebenen vierten Ausführungsform wird ein am vorderen Ende des Roboterarmes 10 befestigtes Werkstück in die Arbeitskammer 12 eingefahren, wobei sich der Faltenbalg 80 in der in Fig. 10 dargestellten Position befindet. In dieser Position sind die Klemmen 88 mit den Kugelzapfen 89 verriegelt und die Stützhebel 82 befinden sich in der ausgefahrenen Position, so dass der Faltenbalg 80 zwischen den Stützhebeln 82 aufgespannt ist und zusammen mit dem Roboterarm 10 gegen die Ringaufnahme 100 angestellt werden kann. Nachdem sich der Faltenbalg 80 in der in den Figuren dargestellten Lage befindet, werden die Verriegelungselemente 102 aktiviert, wodurch der Faltenbalg 80 mit seinem Außenumfang an der Kammerwand 14 fixiert ist. Hierauf werden die Stellzylinder 84 betätigt, so dass die Klemmen 88 von den Kugelzapfen 89 freikommen (vgl. strichpunktierte Darstellung in Fig. 10). Hieraufhin kann der Roboterarm 10 sowohl in Richtung der Achse X bewegt, wie auch um die Achse Y und um eine vertikale Schwenkachse beliebig verschwenkt werden. Gleichzeitig ist eine Rotation um die Achse X mit Hilfe der Dreheinrichtung 11 möglich.

### Bezugszeichenliste

- 10: Roboterarm
- 11: Drehvorrichtung
- 12: Arbeitskammer
- 14: Kammerwand
- 20: Schiebeflügel
- 22: Stellzylinder
- 24: Öffnung
- 24A, 24B: Aussparung
- 26: Dichtelement
- 30: Schiebeflügel
- 32: Stellzylinder
- 40: Schwenkflügel
- 41: Schwenkachse
- 42: Stellzylinder
- 44: Öffnung
- 50: Dichtelement
- 60: Schwenkflügel
- 61: Schwenkachse
- 62: Stellzylinder
- 70: Gummischeibe
- 72: Ringaufnahme
- 74: Bolzen
- 76: Aufnahmeschlitz
- 80: Faltenbalg
- 82: Stützhebel
- 84: Stellzylinder
- 86: Schwenkachse
- 88: Klemme
- 89: Kugelzapfen
- 100: Ringaufnahme
- 102: Verriegelungselement

- A: Arbeitsbereich
- S: Strahlkegel
- X, Y: Achsen

## Patentansprüche

1. Arbeitskammer für eine Strahlanlage, die mit einem Roboterarm (10) zur Manipulation eines zu strahlenden Werkstücks versehen ist, mit einer Kammerwand (14), die einen Zugang zum Einführen des Roboterarmes (10) aufweist, wobei im Bereich des Zugangs eine Dichteinrichtung vorgesehen ist, die zwischen Roboterarm und Kammerwand (14) abdichtet,
**dadurch gekennzeichnet, dass**
die Dichteinrichtung ein zumindest einflügeliges Schleusentor (20, 30; 40, 60) aufweist, das mit einer Öffnung (24, 44) für den Roboterarm (10) versehen ist, wobei im Bereich der Öffnung (24, 44) ein Dichtelement (26, 50) vorgesehen ist, das zwischen Roboterarm (10) und Kammerwand (14) abdichtet.

2. Arbeitskammer nach Anspruch 1,
**dadurch gekennzeichnet, dass**
das Schleusentor zumindest einen Schiebe- (20, 30) oder Schwenkflügel (40, 60) aufweist.

3. Arbeitskammer nach Anspruch 1,
**dadurch gekennzeichnet, dass**
das Schleusentor mehrere Flügel (20, 30; 40, 60) aufweist, die jeweils Aussparungen (24A, 24B; 44) aufweisen, welche gemeinsam die Öffnung bilden.

4. Arbeitskammer nach Anspruch 1,
**dadurch gekennzeichnet, dass**
der Rand der Öffnung (24) des Schleusentores mit dem Dichtelement (26) versehen ist.

5. Arbeitskammer nach Anspruch 1,
**dadurch gekennzeichnet, dass**
das Dichtelement ein im Wesentlichen sphärisches Element (50) aufweist, das mit einer Durchlassöffnung für den Roboterarm (10) versehen ist.

6. Arbeitskammer für eine Strahlanlage, die mit einem Roboterarm (10) zur Manipulation eines zu strahlenden Werkstücks versehen ist, mit einer Kammerwand (14), die einen Zugang zum Einführen des Roboterarmes (10) aufweist, wobei im Bereich des Zugangs eine elastische Dichteinrichtung (70, 80) vorgesehen ist, die zwischen Roboterarm (10) und Kammerwand (14) abdichtet, wobei die Dichteinrichtung (70, 80) an dem Roboterarm (10) befestigbar ist,
**dadurch gekennzeichnet, dass**
an der Kammerwand (14) ein Verriegelungsmittel (72, 76; 102) vorgesehen ist, das eine Verriegelung zwischen Dichteinrichtung (70, 80) und Arbeitskammer (12) bewirkt.

7. Arbeitskammer nach Anspruch 6,
**dadurch gekennzeichnet, dass**
das Verriegelungsmittel (102) durch eine Bewegung des Roboterarmes (10) betätigbar ist.

8. Arbeitskammer nach Anspruch 7,
**dadurch gekennzeichnet, dass**
das Verriegelungsmittel (76) nach Art eines Bajonettverschlusses gestaltet ist.

9. Arbeitskammer nach Anspruch 7,
**dadurch gekennzeichnet, dass**
die Dichteinrichtung eine selbsttragende Scheibe (70) aus flexiblem Material aufweist.

10. Arbeitskammer nach Anspruch 7,
**dadurch gekennzeichnet, dass**
zwischen einem inneren und einem äußeren Rand der Dichteinrichtung (80) ein insbesondere lösbares Stützmittel (82, 88) vorgesehen ist, das zusammen mit dem Roboterarm (10) bewegbar ist.

11. Arbeitskammer nach Anspruch 10,
**dadurch gekennzeichnet, dass**
das Stützmittel zumindest einen Schwenkhebel (82) umfasst.

12. Arbeitskammer nach Anspruch 7,
**dadurch gekennzeichnet, dass**
die Dichteinrichtung nach Art eines Faltenbalges (80) gestaltet ist.
